(19)

Europäisches
Patentamt
European
Patent Office
Office européen
des brevets

(11) **EP 4 542 663 A1**

(12) **EUROPEAN PATENT APPLICATION**
published in accordance with Art. 153(4) EPC

(43) Date of publication:
**23.04.2025 Bulletin 2025/17**

(21) Application number: **22946760.0**

(22) Date of filing: **14.06.2022**

(51) International Patent Classification (IPC):
**H01M 4/13** (2010.01)          **H01M 4/505** (2010.01)
**H01M 4/525** (2010.01)

(52) Cooperative Patent Classification (CPC):
**H01M 4/13; H01M 4/505; H01M 4/525**

(86) International application number:
**PCT/JP2022/023744**

(87) International publication number:
**WO 2023/242940 (21.12.2023 Gazette 2023/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Kabushiki Kaisha Toshiba
Tokyo 105-0023 (JP)**

(72) Inventors:
- **OTANI, Natsuki
  Tokyo 105-0023 (JP)**
- **HASEGAWA, Takuya
  Tokyo 105-0023 (JP)**

(74) Representative: **Hoffmann Eitle
Patent- und Rechtsanwälte PartmbB
Arabellastraße 30
81925 München (DE)**

(54) **POSITIVE ELECTRODE, SECONDARY BATTERY, AND BATTERY PACK**

(57)     According to one embodiment, a positive electrode is provided. The positive electrode includes a positive electrode active material including a lithium-nickel-cobalt-manganese composite oxide represented by general formula $Li_{a-b}Ni_{1-x-y-z}Co_xMn_yM_zO_2$. A ratio Co/Mn in the lithium-nickel-cobalt-manganese composite oxide is 1.0 or less. In the above general formula, $0.9 < a \leq 1.25$, $0 < x < 0.3$, $0 < y < 0.3$, $0 < z < 0.2$, and $x+y+z < 1$. For the positive electrode, entropy change $\Delta S_{0 \leq b < 0.1}$ when $0 \leq b < 0.1$ satisfies the following formula (1), and entropy change $\Delta S_{0.5 < b \leq 0.75}$ when $0.5 < b \leq 0.75$ satisfies the following formula (2).

$$0 \ J/K \cdot mol \ < \ \Delta S_{0 \leq b < 0.1} \ \leq \ 20 \ J/K \cdot mol \ \ ... \ (1)$$

$$0 \ J/K \cdot mol \ < \ \Delta S_{0.5 < b \leq 0.75} \ \leq \ 10 \ J/K \cdot mol \ \ ... \ (2)$$

F I G. 4

EP 4 542 663 A1

**Description**

FIELD

Embodiments of the present invention relate to a positive electrode, secondary battery, and battery pack.

BACKGROUND

Since a lithium ion secondary battery has a characteristic of high energy density, the range of applications has been expanding, from a power source for small consumer devices such as mobile phones and notebook computers to a power source for electric vehicles or hybrid electric vehicles. In such applications, improvements in large capacity property, large current output property, long life property under high temperature environments, and the like are in demand.

CITATION LIST

PATENT LITERATURE

Patent Literature 1: International Publication No. 2014/155496
Patent Literature 2: Jpn. Pat. Appln. KOKAI Publication No. 11-242959
Patent Literature 3: Jpn. Pat. Appln. KOKAI Publication No. 2008-047371
Patent Literature 4: Jpn. Pat. Appln. KOKAI Publication No. 2020-047830

SUMMARY

TECHNICAL PROBLEM

Examples of the positive electrode active material having excellent large capacity property include a lithium-nickel-cobalt-manganese composite oxide (hereinafter, also referred to as NCM). However, it has been found that the rate property of NCM deteriorate as the nickel ratio increases.

An object of the present invention is to provide a positive electrode capable of realizing a secondary battery superior in rate property, a secondary battery including the positive electrode, and a battery pack including the secondary battery.

SOLUTION TO PROBLEM

According to one embodiment, a positive electrode is provided. The positive electrode includes a positive electrode active material including a lithium-nickel-cobalt-manganese composite oxide represented by general formula $Li_{a-b}Ni_{1-x-y-z}Co_xMn_yM_zO_2$. A ratio Co/Mn in the lithium-nickel-cobalt-manganese composite oxide is 1.0 or less. In the above general formula, $0.9 < a \leq 1.25$, $0 < x < 0.3$, $0 < y < 0.3$, $0 < z < 0.2$, and $x+y+z < 1$, and M is one or more elements selected from the group consisting of Fe, Cu, Ti, Mg, Al, W, Y, B, Mo, Nb, Zn, Sn, Zr, Ga, and V. For the positive electrode, entropy change $\Delta S_{0 \leq b < 0.1}$ when $0 \leq b < 0.1$ satisfies the following formula (1), and entropy change $\Delta S_{0.5 < b \leq 0.75}$ when $0.5 < b \leq 0.75$ satisfies the following formula (2).

$$0 \ J/K \cdot mol < \Delta S_{0 \leq b < 0.1} \leq 20 \ J/K \cdot mol \quad \ldots \ (1)$$

$$0 \ J/K \cdot mol < \Delta S_{0.5 < b \leq 0.75} \leq 10 \ J/K \cdot mol \quad \ldots \ (2).$$

According to another embodiment, a secondary battery is provided. The secondary battery includes the positive electrode according to the embodiment, a negative electrode, and an electrolyte.

According to another embodiment, a battery pack is provided. The battery pack includes the secondary battery according to the embodiment.

BRIEF DESCRIPTION OF THE DRAWINGS

FIG. 1 is an exploded perspective view schematically showing an example of a secondary battery including a positive electrode according to an embodiment.

FIG. 2 is a partially unfolded perspective view of an electrode group used in the secondary battery shown in FIG. 1.

FIG. 3 is a block diagram showing an example of an electric circuit of a battery pack according to an embodiment.

FIG. 4 is a graph showing an entropy change $\Delta S$ with respect to a state of charge (SOC) according to Example 1.

FIG. 5 is a graph showing an entropy change $\Delta S$ with respect to SOC according to Comparative Example 1.

DETAILED DESCRIPTION

Hereinafter, embodiments will be described with reference to the drawings. The same features will be referenced by the same notations throughout the embodiments, and overlapping descriptions will be omitted. Each drawing is a schematic drawing for promoting understanding of the embodiments and the descriptions thereof, and shapes, dimensions, and ratios presented therein may be different from those of an actual apparatus; however, they may be appropriately changed as a design choice in consideration of the following descriptions and known techniques.

By using so-called high nickel NCM having a high Ni ratio as the positive electrode active material, an improvement in energy density can be expected. In NCM, as the nickel ratio increases, the reaction from $Ni^{2+}$ ions to $Ni^{3+}$ ions and the reaction from $Ni^{3+}$ ions to $Ni^{4+}$ ions increase, so that the rate property deteriorates. Further, NCM has a problem in that heat generation during charging and discharging is large. In order to improve reliability and safety of the lithium ion battery, control of the amount of heat generated during charging and discharging is important.

The present inventors have found that when the entropy change $\Delta S$ of the positive electrode at the initial stage of charging and the end stage of charging is minus (negative), an endothermic reaction occurs during charging, and thus the charge rate property deteriorates. In order to suppress this, the present inventors have found that it is effective to make the entropy change at the initial stage of charging and the end stage of charging of the positive electrode to plus (positive).

(First Embodiment)

According to a first embodiment, a positive electrode is provided. The positive electrode includes a positive electrode active material including a lithium-nickel-cobalt-manganese composite oxide represented by general formula $Li_{a-b}Ni_{1-x-y-z}Co_xMn_yM_zO_2$. A ratio Co/Mn in the lithium-nickel-cobalt-manganese composite oxide is 1.0 or less. In the above general formula, $0.9 < a \leq 1.25$, $0 < x < 0.3$, $0 < y < 0.3$, $0 < z < 0.2$, and $x+y+z < 1$, and M is one or more elements selected from the group consisting of Fe, Cu, Ti, Mg, Al, W, Y, B, Mo, Nb, Zn, Sn, Zr, Ga, and V. For the positive electrode, entropy change $\Delta S_{0 \leq b < 0.1}$ when $0 \leq b < 0.1$ satisfies the following formula (1), and entropy change $\Delta S_{0.5 < b \leq 0.75}$ when $0.5 < b \leq 0.75$ satisfies the following formula (2).

$$0 \ J/K \cdot mol \ < \ \Delta S_{0 \leq b < 0.1} \ \leq \ 20 \ J/K \cdot mol \ \ \ldots \ (1)$$

$$0 \ J/K \cdot mol \ < \ \Delta S_{0.5 < b \leq 0.75} \ \leq \ 10 \ J/K \cdot mol \ \ \ldots \ (2).$$

Specifically, in a positive electrode containing a lithium-nickel-cobalt-manganese composite oxide represented by the following general formula (A) as a positive electrode active material, both entropy change $\Delta S_{0 \leq b < 0.1}$ when subscript b satisfies $0 \leq b < 0.1$ and entropy change $\Delta S_{0.5 < b \leq 0.75}$ when subscript b satisfies $0 \leq b < 0.1$ are adjusted to be positive.

$$Li_{a-b}Ni_{1-x-y-z}Co_xMn_yM_zO_2 \ldots \qquad (A)$$

In the present disclosure and claims, for the lithium-nickel-cobalt-manganese composite oxide represented by the formula (A), a case where the subscript b satisfies $0 \leq b < 0.1$ is defined as the initial stage of charging or the end stage of discharging. In addition, a case where the subscript b satisfies $0.5 < b \leq 0.75$ is defined as the end stage of charging or the initial stage of discharging.

Note, that in a potential rising process, that is, a case where the entropy change $\Delta S$ in the positive electrode during charging or the negative electrode during discharging is positive (a case where $\Delta S$ is "+") is an exothermic reaction, and a case where the entropy change $\Delta S$ is negative (a case where $\Delta S$ is "-") is an endothermic reaction. On the other hand, in a potential lowering process, that is, a case where the entropy change $\Delta S$ in the positive electrode during discharging or the negative electrode during charging is negative (a case where $\Delta S$ is "-") is an exothermic reaction, and a case where the entropy change $\Delta S$ is positive (a case where $\Delta S$ is "+") is an endothermic reaction.

When the entropy change $\Delta S$ of the positive electrode at the initial stage of charging and the end stage of charging is positive, an exothermic reaction occurs during charging, and thus the overvoltage of the battery is reduced. As a result, the rate property and the cycle life property are improved in the secondary battery including the positive electrode. When the entropy change ΔS at the initial stage of charging and the end stage of charging is positive, the activation energy for causing a charge reaction tends to be small. As one of the factors, considerable is that during the initial stage of charging and the end stage of charging, NCM after lithium ion extraction exists in a state that is stable as compared with NCM before lithium ion extraction.

Since the positive electrode generates heat at the initial stage of charging and the end stage of charging and therefore has excellent Li diffusibility, the positive electrode has rapid charging performance. Also, during discharging, an endothermic reaction occurs in the positive electrode at the initial stage of discharging and the end stage of discharging. Therefore, abnormal heat generation such as thermal runaway can be suppressed.

Entropy change associated with insertion and extraction of lithium ions is affected by the particle form of NCM. The entropy change differs between the case where the particle form of NCM is a multiparticle with many grain boundaries and the case of singular particles without grain boundaries. Since particle cracking does not occur in singular particles, when NCM contains many singular particles, an electronic conductive network between the particles is easily configured. Therefore, lithium ion diffusibility during charge reaction is excellent. Therefore, when NCM contains many singular particles, entropy change at the initial stage of charging and the end stage of charging tends to be plus (+), and on top of that, high rate property can be exhibited. Specifically, the ratio of singular particles among the plurality of particles constituting NCM is preferably 80% or more, and more preferably 90% or more. The ratio of singular particles contained in NCM may be 100%.

<Method for measuring proportion of singular particles among active material particles>

The proportion of singular particles among the active material particles can be measured by observing a cross-section of the positive electrode (electrode) with a scanning electron microscope (SEM) as described below.

First, the electrode to be measured is cut with an ion milling apparatus. When the electrode is cut, the electrode is cut along the thickness direction. The cross-section of the cut electrode is attached to a SEM sample stage. At this time, treatment using an electrically conductive tape or the like is carried out so that the electrode does not peel off or lift from the sample stage. The electrode (active material-containing layer) attached to the SEM sample stage is observed with SEM to obtain a SEM image. In the SEM measurement, observation is performed at a magnification of 1,000 times. Also, when introducing the electrode into a sample chamber, an inert atmosphere is preferably maintained.

Fifty indiscriminate particles from among a plurality of particles present in the field of view are observed, and the number of particles present as singular particles is counted. The proportion of the number of singular particles to the number of particles present in the field of view can be regarded as the particle number of singular particles included among the whole of active material particles (the whole of NCM).

The average particle size (D50) of the positive electrode active material is, for example, in the range of 3 $\mu$m to 15 $\mu$m, preferably in the range of 3 $\mu$m to 6 $\mu$m. When the average particle size is within this range, Li ions easily enter and exit far inside the positive electrode active material, and the density of the positive electrode active material is easily increased in the positive electrode active material-containing layer, as well.

The entropy change ΔS of the positive electrode at the initial stage of charging and the end stage of charging is greatly affected by constituent elements of NCM. In order to make both the entropy change $\Delta S_{0 \leq b < 0.1}$ and the entropy change $\Delta S_{0.5 < b \leq 0.75}$ plus (positive), the ratio Co/Mn in the general formula (A) needs to be 1.0 or less. The "ratio Co/Mn" means the ratio of the amount of substance of Co to the amount of substance of Mn.

Mn has a large effect of maintaining the crystal structure. Therefore, even if lithium ions are inserted into and extracted from NCM having a ratio Co/Mn of 1.0 or less, the crystal structure is hardly broken.

In addition, in a so-called LCO ($Li_{1-x}CoO_2$) containing no Mn, the crystal structure becomes unstable and the reversibility decreases in the region of x > 0.5, so that heat generation occurs. Further, oxygen is extracted from the crystal lattice by unstable tetravalent Co generated in the charging process, and thermal stability is deteriorated. Therefore, the thermal stability is improved as the Co amount becomes smaller. Furthermore, since the C-axis length of LCO increases and the volume of LCO expands with charging (expansion coefficient: 2.6%), the structural stability is considered to increase with more the Mn relative to Co. The above discussion for LCO is assumed to apply equally with respect to NCM.

The ratio Co/Mn may be 0.90 or less or 0.80 or less.

For the positive electrode according to the embodiment, the entropy change $\Delta S_{0 \leq b < 0.1}$ when 0 ≤ b < 0.1 in the formula (A) satisfies the following formula (1).

$$0 \text{ J/K} \cdot \text{mol} < \Delta S_{0 \leq b < 0.1} \leq 20 \text{ J/K} \cdot \text{mol} \quad \ldots \quad (1)$$

When $\Delta S_{0 \leq b < 0.1}$ is smaller than 0 J/K·mol, an overvoltage at the initial stage of charging cannot be reduced, and so, excellent rate property is difficult to achieve. When $\Delta S_{0 \leq b < 0.1}$ exceeds 20 J/K·mol, the cell heat generation at the initial stage of charging becomes too large, and the risk of causing thermal runaway increases particularly in an unsafe environment. In addition, since heat is absorbed at the end stage of discharging, discharge capacity tends not to be developed, which is not preferable. When $0 \leq b < 0.1$ in the formula (A), the state of charge (SOC) of the secondary battery is, for example, within the range of 0% to 10%.

For the positive electrode according to the embodiment, the entropy change $\Delta S_{0.5<b\leq0.75}$ when $0.5 < b \leq 0.75$ in the formula (A) satisfies the following formula (2).

$$ 0 \ J/K \cdot mol \ < \ \Delta S_{0.5<b\leq0.75} \ \leq \ 10 \ J/K \cdot mol \ \ \ldots \ (2) $$

When $\Delta S_{0.5<b\leq0.75}$ is smaller than 0 J/K·mol, an overvoltage at the end stage of charging cannot be reduced, and so excellent rate property is difficult to achieve. When $\Delta S_{0.5<b\leq0.75}$ exceeds 10 J/K·mol, the cell heat generation at the end stage of charging becomes too large, and the risk of causing thermal runaway increases particularly in an unsafe environment. In addition, since heat is absorbed at the initial stage of discharging, an overvoltage at the initial stage of discharging tends to be unreducible, which is not preferable. When $0.5 < b \leq 0.75$ in the formula (A), the state of charge (SOC) of the secondary battery is, for example, within the range of 70% to 100%.

When the entropy change $\Delta S$ of the positive electrode is measured, the entropy change $\Delta S$ is measured by a method described in Examples described later.

Hereinafter, details of the positive electrode of the embodiment will be described.

The positive electrode includes, for example, a positive electrode current collector and a positive electrode active material-containing layer formed on at least one face of the positive electrode current collector. When the positive electrode current collector has, for example, a sheet shape, the positive electrode active material-containing layer may be supported on at least one of the principal surfaces of the positive electrode current collector. The positive electrode active material-containing layer may contain a substance other than the positive electrode active material, for example, a positive electrode electro-conductive agent and a positive electrode binder.

The positive electrode active material-containing layer contains a lithium-nickel-cobalt-manganese composite oxide represented by the following general formula (A) as a positive electrode active material.

$$ Li_{a-b}Ni_{1-x-y-2}Co_xMn_yM_zO_2 \ldots \qquad (A) $$

In the general formula (A), $0.9 < a \leq 1.25$, $0 < x < 0.3$, $0 < y < 0.3$, $0 < z < 0.2$, and $x+y+z < 1$. M is one or more elements selected from the group consisting of Fe, Cu, Ti, Mg, Al, W, Y, B, Mo, Nb, Zn, Sn, Zr, Ga, and V.

The lithium-nickel-cobalt-manganese composite oxide represented by the formula (A) has a large capacity per unit mass, and a large capacity can be obtained by using the lithium-nickel-cobalt-manganese composite oxide up to a positive electrode potential of 4.2 V (vs. Li/Li+) or more. The lithium-nickel-cobalt-manganese composite oxide represented by the formula (A) may have, for example, a crystal structure of a spinel structure.

Molar ratio a-b in the formula (A) can vary as the positive electrode occludes and releases lithium ions. A preferred range of molar ratio a is $1.05 \leq a \leq 1.15$. Molar ratio b represents the amount of lithium element extracted from the lithium-nickel-cobalt-manganese composite oxide represented by the formula (A). The range of molar ratio b is, for example, $0 \leq b \leq 0.75$. Therefore, molar ratio a-b may satisfy, for example, $0.3 \leq a-b \leq 1.15$.

By setting molar ratio x in the formula (A) to $0 < x < 0.3$ and molar ratio y to $0 < y < 0.3$, the lithium-nickel-cobalt-manganese composite oxide further contains Co and Mn in addition to Ni as a transition metal, and thus the capacity per unit mass increases. More preferable ranges of molar ratio x and molar ratio y are $0.05 \leq x \leq 0.20$ and $0.05 \leq y \leq 0.30$. In this case, since the Ni content is high, a high capacity can be achieved.

Molar ratio x and molar ratio y are not particularly limited as long as the molar ratios are set within the above numerical ranges and so that the ratio Co/Mn would be 1.0 or less.

x+y+z in the above formula (A) may satisfy $x+y+z < 0.50$ or $x+y+z < 0.70$. When $x+y+z < 0.50$ is satisfied, NCM having a high molar ratio of Ni (also referred to as high nickel) is obtained, so that a high battery capacity can be achieved for the reasons described above. In addition, in the case where the molar ratio of nickel is high, the rate property improvement effect by virtue of making the entropy change $\Delta S$ at the initial stage of charging and the end stage of charging be plus (positive) is relatively easy to obtain , as compared with the case where the molar ratio of nickel is not high.

A more preferable range of molar ratio z of element M in the formula (A) is $0.01 \leq z \leq 0.05$. By containing element M, for example, when M = Al, lattice distortion is reduced, and the Li ion diffusibility is improved. When M = Mg, the bulk electron conductivity is improved, and the apparent discharge capacity is improved. Furthermore, cycle stability under high voltage is improved. When M = Zr, the cycle property is improved. When M = Ti, the cycle property is improved by phase change relaxation under high-voltage charging and discharging. When M = Ga, the bulk electron conductivity is improved, and the cycle property is improved.

The ratio of the amount of lithium to the amount of metal elements other than lithium, Li/Me, contained in the lithium-nickel-cobalt-manganese composite oxide represented by the formula (A) is preferably 1.1 or less. When the ratio Li/Me is 1.1 or less, extra residual Li is less likely to be present, and thus cation exchange between Li and $H_2O$ does not occur upon exposure to air, and a decrease in Li diffusion rate does not occur, so that an increase in resistance does not occur. When extra Li is present and cation exchange of Li/H occurs, the barrier energy of Li diffusion in NCM increases, which causes an increase in resistance). The ratio Li/Me is preferably 1.0 or less. The ratio Li/Me is 0.97 or more according to an example. When the ratio Li/Me is less than 0.97, there is a possibility that the reaction resistance of the positive electrode in the non-aqueous electrolyte secondary battery using the obtained positive electrode active material increases.

Here, the character "Li" in the ratio Li/Me means the amount of substance of Li. In addition, the character "Me" means the amount of substance of metal elements other than lithium. The metal elements other than lithium refers to, for example, at least one metal element selected from the group consisting of Ni, Co, Mn, Fe, Cu, Ti, Mg, Al, W, Y, B, Mo, Nb, Zn, Sn, Zr, Ga, and V. The ratio Li/Me of NCM can be measured by inductively coupled plasma (ICP) emission spectroscopy described later.

The positive electrode active material may include another positive electrode active material different from NCM represented by the general formula (A). The content proportion of NCM represented by the general formula (A) included in the positive electrode active material is, for example, 50 wt% or more, preferably 90 wt% or more. The ratio may be 100 wt%.

The electro-conductive agent can enhance current collecting performance and suppress contact resistance between the active material and the current collector. The electro-conductive agent preferably includes a carbon material. Examples of the carbon material include acetylene black, ketjen black, furnace black, graphite, carbon nanotubes, and carbon nanofibers. The active material-containing layer may include one species or two species or more of the above carbon materials.

The electro-conductive agent has, for example, a particle shape or a fiber shape. The average particle size of the electro-conductive agent particles is preferably 20 nm to 100 nm. The proportion of the electro-conductive agent within the active material-containing layer is, for example, preferably 3% by mass to 20% by mass.

As the binder, for example, polytetrafluoroethylene (PTFE), polyvinylidene fluoride (PVdF), or fluorine rubber is included. One species or two species or more of the binder may be used. The proportion of the binder in the active material-containing layer is preferably 1% by mass to 1.8% by mass.

The density of the active material-containing layer is preferably 3.2 g/cm$^3$ to 3.8 g/cm$^3$.

As the current collector, for example, a metal foil or an alloy foil may be used. Examples of the metal foil include an aluminum foil, a stainless steel foil, and a nickel foil. Examples of the alloy foil include an aluminum alloy, a copper alloy, and a nickel alloy.

<Method of producing positive electrode>

The positive electrode is produced, for example, by the following method. A positive electrode active material produced by a method described layer, an electro-conductive agent, and a binder are mixed together with a solvent (e.g., N-methylpyrrolidone (NMP)) to prepare a slurry. The obtained slurry is applied onto a current collector, dried, and then pressed to obtain a positive electrode. If necessary, a step of cutting to a predetermined width may be performed before or after the pressing.

An example of a method for producing the positive electrode active material (NCM) included in the positive electrode according to the embodiment will be described below.

A starting material containing Li and a starting material containing a transition metal are used. As the starting material containing Li, for example, a salt, such as $Li_2CO_3$, LiOH, and $Li_2SO_4$ or an oxide, such as $Li_2O$ and $Li_2O_2$ may be used. As the starting material containing the transition metal, for example, a salt, an oxide, or the like, containing the transition metal may be used.

The starting material containing the transition metal is weighed so as to achieve a target element composition ratio, and mixed via a dry method or a wet method. Hereupon, with regard to the element composition ratio for transition metals, mixing is carried out so that the Mn amount is made equivalent or greater than the Co amount. For the dry method, a mixing apparatus, such as a ball mill, is used. For the wet method, for example, a coprecipitation process is used. In the coprecipitation process, an aqueous solution obtained by dissolving the salt containing the transition metal in water is added dropwise into an alkaline aqueous solution, such as aqueous sodium hydroxide or aqueous lithium hydroxide, and a resultant precipitate is filtered and dried to obtain a precursor.

The obtained precursor containing the transition metal is mixed with a starting material containing Li, and fired in air or oxygen atmosphere for 3 hours to 48 hours at a temperature from 600°C to 1200°C. Part of the starting material containing the transition metal may be mixed with the starting material containing Li when the starting material containing Li is mixed, and then fired.

In order to obtain NCM represented by the general formula (A) according to the embodiment, firing is preferably performed in an oxygen atmosphere. This is because of the following reason. In the composition with a high nickel ratio, Ni is easily reduced to divalent particularly during firing at a temperature of 900°C or higher, and cation mixing easily occurs, in which $Ni^{2+}$ intrudes into a 3a site which is a lithium site. When volatilization of Li occurs during firing, Li deficiency occurs in a Li layer, so that a cation mixing structure is likely to arise. The cation mixing structure invokes a decrease in Li diffusibility and a decrease in cycle property. Considerable as a measure for suppressing cation mixing is an adoption of a composition with excessive Li upon Li source addition. However, in the case of excessive Li, an unreacted component tends to remain, whereby the resistance increases after preparation of the battery. Therefore, it is preferable to perform firing under an oxygen atmosphere as described above in order to suppress the generation of $Ni^{2+}$ itself, rather than to make Li excessive in order to make Li deficiency less likely to occur. Also, in order to suppress cation mixing, the firing temperature is preferably 900°C or lower. Furthermore, $LiOH$, $LiNO_3$ or the like having higher reactivity are preferably used as the Li source.

Next, a method for measuring the average particle size (D50) of the positive electrode active material and the active material composition will be described. First, a method of taking out an electrode from a battery will be described.

First, a battery to be measured is prepared. The battery to be measured is one that has a discharge capacity of 80% or more of the rated capacity. That is, a battery in which deterioration has excessively progressed is not to be subjected to measurement.

Next, the prepared battery is discharged until the open circuit voltage reaches 2.0 to 2.2 V. The discharged battery is then transferred into an argon-filled glove box with an internal atmosphere dew point of -70°C. In such a glove box, the battery is opened. The electrode group is taken out from the battery that has been cut open. When the taken-out electrode group includes a positive electrode lead and a negative electrode lead, the positive electrode lead and the negative electrode lead are cut while taking care not to short-circuit the positive electrode and the negative electrode.

Next, the electrode group is disassembled and dismembered into a positive electrode, a negative electrode, and a separator. The positive electrode thus obtained is washed using diethyl carbonate as a solvent. In this washing, a member obtained by dismemberment is completely immersed in a diethyl carbonate solvent and left in this state for 60 minutes.

After washing, the electrode is subjected to vacuum drying. In vacuum drying, the pressure is reduced from atmospheric pressure to -97 kpa or more in an environment of 25°C, and this state is maintained for 10 minutes. The electrode taken out by such a procedure is measured by the following methods.

<Measurement of average particle size>

The active material-containing layer is dislodged off from the electrode using, for example, a spatula, and ultrasonically pulverized, then the positive electrode active material is separated using a centrifuge, and the positive electrode active material is measured with a particle size distribution measuring device (for example, laser diffraction particle size analyzer SALD-2300 (manufactured by Shimadzu Corporation)) .

<Analysis of active material composition>

The active material composition can be analyzed through powder X-ray diffraction measurement and ICP emission spectroscopy, as described below.

The powder X-ray diffraction measurement of the active material can be performed, for example, as follows.

First, the target sample is ground until an average particle size reaches about 5 $\mu$m. The ground sample is filled into a holder portion having a depth of 0.2 mm that is formed on a glass sample plate. At this time, care should be taken to fill the holder portion sufficiently with the sample. In addition, precaution should be taken to perform the filling with the amount of the sample neither being excessive nor insufficient such that there would not be any cracks, voids, or the like. Next, another glass plate is pressed from the outside to flatten a surface of the sample filling the holder portion. Precaution should be taken such that there would not be any recess or a protrusion with respect to a reference plane of the holder due to an excessive or insufficient amount of filling.

Next, the glass plate filled with the sample is set in a powder X ray diffractometer, and a diffraction pattern (X-Ray diffraction pattern (XRD pattern)) is obtained using Cu K$\alpha$ rays.

Note that, there may be a case where the orientation of the sample becomes great depending on a particle shape of the sample. In the case where there is high degree of orientation in the sample, there is the possibility of deviation of the peak or variation in an intensity ratio, depending on how the sample is filled. Such a sample having significantly high orientation is measured using a glass capillary. Specifically, the sample is inserted into the capillary, which is then mounted on a rotary sample table and measured. Such a measuring method can provide the result with the orientation alleviated. A capillary formed of Lindeman glass having a diameter of 1 mm to 6 mm $\varphi$ is preferably used as the glass capillary.

In the case of performing powder X-ray diffraction measurement with regard to an active material included in an electrode, for example, the measurement can be performed as described below.

First, in order to ascertain the state of the crystals of the active material, a state where lithium ions are completely extracted from the active material is achieved.

Next, the battery is disassembled in a glove box filled with argon, and the electrode is taken out then washed with a suitable solvent. As a suitable solvent, for example, ethyl methyl carbonate may be used. If washing of the electrode is insufficient, an impurity phase such as that of lithium carbonate and lithium fluoride may be mixed in due to the influence of the lithium ions remaining in the electrode. In such a case, it is preferable to use an airtight container with which the measurement atmosphere can be performed in an inert gas. The washed electrode is cut so as to have about the same area as that of a holder of the powder X ray diffraction apparatus, and used as a measurement sample. The sample is directly attached to a glass holder and measurement is performed.

Hereupon, peaks derived from the metal foil serving as the current collector, the electro-conductive agent, the binder, and the like are measured and ascertained in advance using XRD. As a matter of course, this operation can be omitted if such peaks has been ascertained in advance. When the peak (s) of the current collector and the peak (s) of the active material overlap one another, the measurement is desirably performed with the active material-containing layer removed from the current collector. This is in order to separate the overlapping peaks when quantitatively measuring the peak intensity. The active material-containing layer may be physically dislodged. The active material-containing layer can be easily removed by applying ultrasonic waves within a solvent. When ultrasonic treatment is performed to remove the active material-containing layer off from the current collector, an electrode powder (including the active material, the electro-conductive agent, and the binder) can be collected by evaporating the solvent. The powder X ray diffraction measurement of the active material can be performed by filling for example, a Lindemann glass capillary or the like with the collected electrode powder and performing the measurement. The electrode powder collected by the ultrasonic treatment can also be subjected to various analysis other than the powder X ray diffraction measurement.

<ICP emission spectroscopy>

The composition of the active material can be analyzed using inductively coupled plasma (ICP) emission spectrometry, for example. At this time, the abundance ratio (molar ratio) of each element depends on the sensitivity of an analyzing apparatus to be used. Therefore, the measured molar ratio may deviate from the actual molar ratio by an error of the measurement apparatus. However, even when the numerical value deviates from the actual value and falls within the error range of the analyzing apparatus, the performance of the active material according to the embodiment can still be sufficiently exhibited.

In order to measure the composition of the active material included in the battery according to ICP emission spectrometry, the following procedure is specifically performed.

First, according to the procedure described in the section of powder X-ray diffraction measurement, an electrode containing an active material to be measured is taken out from a secondary battery, and washed. A portion containing the electrode active material, such as the active material-containing layer, is removed from the washed electrode. For example, the portion containing the electrode active material can be dislodged by irradiation with an ultrasonic wave. As a specific example, for example, the active material-containing layer containing the electrode active material can be taken off from an electrode current collector by placing an electrode in ethyl methyl carbonate placed in a glass beaker and vibrating the electrode in an ultrasonic washer.

Next, the removed portion is heated in air for a short time (for example, about 1 hour at 500°C) to burn off unnecessary components such as the binder component and carbon. By dissolving the residue with an acid, a liquid sample containing the active material can be produced. At this time, hydrochloric acid, nitric acid, sulfuric acid, hydrogen fluoride and the like can be used as the acid. The composition in the active material can be known by subjecting the liquid sample to ICP analysis.

The composition analysis reveals the theoretical capacity of the measured active material. Thereafter, the value of b in the general formula (A) can be calculated and adjusted by adjusting an electrode to a state of charge of choice, and on top of that, the value of entropy at that value of b can be determined.

According to the first embodiment described above, a positive electrode is provided. The positive electrode includes a positive electrode active material including a lithium-nickel-cobalt-manganese composite oxide represented by general formula $Li_{a-b}Ni_{1-x-y-z}Co_xMn_yM_zO_2$. A ratio Co/Mn in the lithium-nickel-cobalt-manganese composite oxide is 1.0 or less. In the above general formula, $0.9 < a \leq 1.25$, $0 < x < 0.3$, $0 < y < 0.3$, $0 < z < 0.2$, and $x+y+z < 1$, and M is one or more elements selected from the group consisting of Fe, Cu, Ti, Mg, Al, W, Y, B, Mo, Nb, Zn, Sn, Zr, Ga, and V. For the positive electrode, entropy change $\Delta S_{0 \leq b < 0.1}$ when $0 \leq b < 0.1$ satisfies the following formula (1), and entropy change $\Delta S_{0.5 < b \leq 0.75}$ when $0.5 < b \leq 0.75$ satisfies the following formula (2).

$$0 \ J/K \cdot mol \ < \ \Delta S_{0 \leq b < 0.1} \ \leq \ 20 \ J/K \cdot mol \ \ ... \ (1)$$

$$0 \ J/K \cdot mol \ < \ \Delta S_{0.5 < b \leq 0.75} \ \leq \ 10 \ J/K \cdot mol \ \ ... \ (2).$$

Since the entropy change $\Delta S_{0 \leq b < 0.1}$ in the initial stage of charge and the entropy change $\Delta S_{0.5 \leq b < 0.75}$ in the end stage of charge satisfy the above formulae (1) and (2), exothermic reactions occur during charge, and overvoltage of the battery diminishes. As a result, the positive electrode according to the embodiment can realize a secondary battery superior in rate property.

(Second Embodiment)

According to a second embodiment, provided is a secondary battery including the positive electrode according to the first embodiment, a negative electrode, and an electrolyte. The secondary battery may be, for example, a lithium ion secondary battery. The secondary battery may be a nonaqueous electrolyte secondary battery including nonaqueous electrolyte (s) .

The secondary battery may further include a separator provided between the positive electrode and the negative electrode. The negative electrode, the positive electrode, and the separator may configure an electrode group. The electrolyte may be held in the electrode group. The secondary battery may further include a container member that houses the electrode group and the electrolyte. The secondary battery may further include a negative electrode terminal electrically connected to the negative electrode and a positive electrode terminal electrically connected to the positive electrode.

Hereinafter, the positive electrode, negative electrode, electrolyte, separator, and container member will be described in detail.

(1) Positive Electrode

As the positive electrode provided in the secondary battery according to the second embodiment, the positive electrode according to the first embodiment may be used.

(2) Negative Electrode

The negative electrode may include a negative electrode current collector and a negative electrode active material-containing layer. The negative electrode active material-containing layer may be formed on one face or both obverse and reverse faces of the negative electrode current collector. The negative electrode active material-containing layer may contain an active material, and optionally an electro-conductive agent and a binder.

The negative electrode active material preferably includes a compound capable of having lithium ions inserted and extracted at a potential of $0.4 \, V$ (vs. $Li/Li^+$) or more. A secondary battery configured with a negative electrode including such a negative electrode active material can suppress precipitation of lithium due to charge and discharge. The negative electrode active material includes, for example, at least one species selected from the group consisting of carbon materials, titanium-containing oxides, metal oxides, silicon, and silicon oxides.

As the carbon materials, for example, there are natural graphite, artificial graphite, coke, vapor-grown carbon fibers, mesophase pitch-based carbon fibers, spherical carbon, and resin-fired carbon. More preferable examples of the carbon materials include vapor-grown carbon fibers, mesophase pitch-based carbon fibers, and spherical carbon. The carbon material preferably has lattice spacing $d_{002}$ between (002) planes of $0.34 \, nm$ or less according to X-ray diffraction.

Examples of the titanium-containing oxides include lithium titanate having a ramsdellite structure (e.g., $Li_{2+y}Ti_3O_7$, $0 \leq y \leq 3$), lithium titanate having a spinel structure (e.g., $Li_{4+x}Ti_5O_{12}$, $0 \leq x \leq 3$), monoclinic titanium dioxide ($TiO_2$), anatase titanium dioxide, rutile titanium dioxide, hollandite titanium composite oxide, monoclinic niobium titanium oxides, and orthorhombic titanium-containing composite oxides.

As the metal compound, a metal sulfide or a metal nitride maybe used. As the metal sulfide, for example, titanium sulfide such as $TiS_2$, for example, molybdenum sulfide such as $MoS_2$, and for example, iron sulfides such as $FeS$, $FeS_2$, or $Li_xFeS_2$ may be used. As the metal nitride, for example, lithium cobalt nitride (for example, $Li_sCo_tN$, $0 < s < 4$, $0 < t < 0.5$) may be used.

The electro-conductive agent is added to improve current collection performance and to suppress the contact resistance between the active material and the current collector. Examples of the electro-conductive agent include carbonaceous substances such as vapor grown carbon fiber (VGCF), carbon blacks such as acetylene black, as well as graphite. One of these may be used as the electro-conductive agent, or alternatively, two or more may be used in combination as the electro-conductive agent. Alternatively, instead of using an electro-conductive agent, a carbon coating or an electro-conductive inorganic material coating may be applied to the surface of the active material particle.

The binder is added to fill gaps among the dispersed active material and also to bind the active material with the negative electrode current collector. Examples of the binder include polytetrafluoroethylene (PTFE), polyvinylidene fluoride (PVdF), fluororubber, styrene butadiene rubber, polyacrylate compounds, imide compounds, carboxymethyl cellulose (CMC), and salts of CMC. One of these may be used as the binder, or alternatively, two or more may be used in combination as the binder.

There may be used for the current collector, a material which is electrochemically stable at the potential at which lithium (Li) is inserted into and extracted from the active material, for example, a potential higher than 1.0 V (vs. Li/Li$^+$) . For example, the current collector is preferably made of copper, nickel, stainless steel or aluminum foil, or alternatively, an aluminum alloy foil containing one or more element selected from the group consisting of Mg, Ti, Zn, Mn, Fe, Cu, and Si. The thickness of the current collector is preferably from 5 $\mu$m to 20 $\mu$m. A current collector having such a thickness can maintain balance between the strength of the electrode and weight reduction.

The negative electrode may be fabricated by the following method, for example. First, active material, electro-conductive agent, and binder are suspended in a solvent to prepare a slurry. The slurry is applied onto one surface or both of obverse and reverse surfaces of a current collector. Next, the applied slurry is dried so as to obtain a stack of active material-containing layer and current collector. Then, the stack is subjected to pressing. The negative electrode can be fabricated in this manner.

(3) Electrolyte

As the electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably from 0.5 mol/L to 2.5 mol/L.

Examples of the electrolyte salt include lithium salts such as lithium perchlorate (LiClO$_4$), lithium hexafluorophosphate (LiPF$_6$), lithium tetrafluoroborate (LiBF$_4$), lithium hexafluoroarsenate (LiAsF$_6$), lithium trifluoromethanesulfonate (LiCF$_3$SO$_3$), lithium bistrifluoromethylsulfonylimide (LiN(CF$_3$SO$_2$)$_2$), and mixtures thereof. The electrolyte salt is preferably resistant to oxidation even at a high potential, and most preferably LiPF$_6$.

Examples of the organic solvent include cyclic carbonates such as propylene carbonate (PC), ethylene carbonate (EC), and vinylene carbonate (VC); linear carbonates such as diethyl carbonate (DEC), dimethyl carbonate (DMC), and methyl ethyl carbonate (MEC); cyclic ethers such as tetrahydrofuran (THF), 2-methyl tetrahydrofuran (2-MeTHF), and dioxolane (DOX); linear ethers such as dimethoxy ethane (DME) and diethoxy ethane (DEE); $\gamma$-butyrolactone (GBL), acetonitrile (AN), and sulfolane (SL). These organic solvents may be used singularly or as a mixed solvent.

The gel nonaqueous electrolyte is prepared by obtaining a composite of a liquid nonaqueous electrolyte and a polymeric material. As the polymeric material, for example, at least one species selected from the group consisting of polyvinylidene fluoride, polyacrylonitrile, polyethylene oxide, acrylic polymers, polyamide, and polyvinyl alcohol may be used. By using a gel electrolyte as the electrolyte, elution of metal from the positive electrode can be suppressed, and moreover, generation of gases such as hydrogen can be suppressed. As a result, superior cycle life property can be obtained.

Alternatively, other than the liquid nonaqueous electrolyte and gel nonaqueous electrolyte, an ambient temperature molten salt (ionic melt) including lithium ions, a polymer solid electrolyte, an inorganic solid electrolyte, or the like may be used as the nonaqueous electrolyte.

The ambient temperature molten salt (ionic melt) indicates compounds among organic salts made of combinations of organic cations and anions, which are able to exist in a liquid state at ambient temperature (15°C to 25°C) . The ambient temperature molten salt includes an ambient temperature molten salt which exists alone as a liquid, an ambient temperature molten salt which becomes a liquid upon mixing with an electrolyte salt, an ambient temperature molten salt which becomes a liquid when dissolved in an organic solvent, and mixtures thereof. In general, the melting point of the ambient temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity.

(4) Separator

The separator may be made of, for example, a porous film or synthetic resin nonwoven fabric including polyethylene (PE), polypropylene (PP), cellulose, or polyvinylidene fluoride (PVdF) . In view of safety, a porous film made of polyethylene or polypropylene is preferred. This is because at a certain temperature, such a porous film melts and can thereby shut off current.

A solid electrolyte layer containing solid electrolyte particles may be used as the separator. The solid electrolyte layer may contain one species of solid electrolyte particles or may contain plural species of solid electrolyte particles. The solid electrolyte layer may be a solid electrolyte composite film containing the solid electrolyte particles. For example, the solid electrolyte composite film is obtained by molding the solid electrolyte particles into a film shape using a polymeric material. The solid electrolyte layer may contain at least one selected from the group consisting of a plasticizing agent and an electrolyte salt. When the solid electrolyte layer contains an electrolyte salt, for example, the alkali metal ion conductivity of the solid electrolyte layer can be raised further.

Examples of the polymeric material include a polyether-based binder, a polyester-based binder, a polyamine-based binder, a polyethylene-based binder, a silicone-based binder, and a polysulfide-based binder.

The lithium ion conductivity of the solid electrolyte is preferably $1 \times 10^{-10}$ S/cm or more at 25°C. With the lithium ion conductivity of the solid electrolyte at 25°C being $1 \times 10^{-10}$ S/cm or more, the lithium ion concentration near the solid electrolyte surface tends to be high, whereby rate property and life property can be made high. The lithium ion conductivity of the solid electrolyte at 25°C is more preferably $1 \times 10^{-6}$ S/cm or more. One exemplary upper limit of the lithium ion conductivity of the solid electrolyte is $2 \times 10^{-2}$ S/cm.

Examples of the solid electrolyte include sulfide solid electrolytes, oxide solid electrolytes, nitride solid electrolytes, polymer solid electrolytes, and the like.

(5) Container Member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal container is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), prismatic, cylindrical, coin-shaped, or button-shaped. The container member may be appropriately selected depending on battery size and use of the battery.

Next, the secondary battery according to the second embodiment will be more concretely described with reference to the drawings.

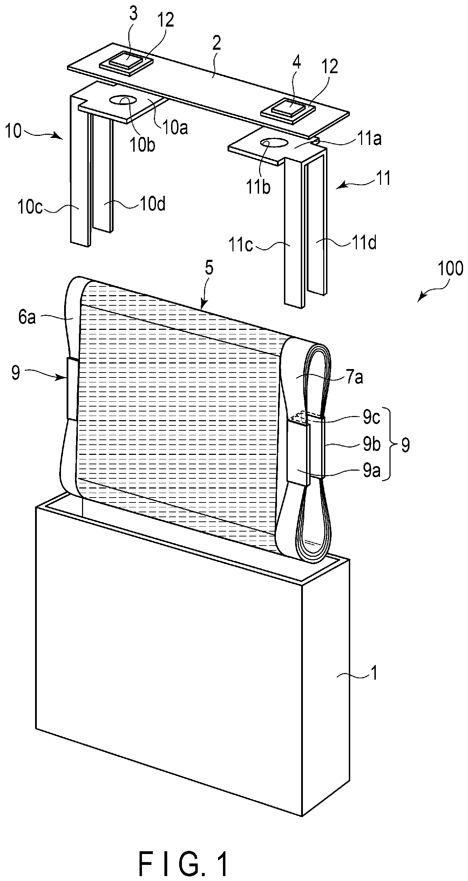

FIG. 1 is an exploded perspective view of an example of a secondary battery of the embodiment. The battery shown in FIG. 1 is a sealed prismatic secondary battery. The secondary battery shown in FIG. 1 includes a container can 1, a lid 2, a positive electrode external terminal 3, a negative electrode external terminal 4, and an electrode group 5. The container can 1 and the lid 2 configure a container member. The container can 1 has a bottomed rectangular tube shape and is formed of a metal such as aluminum, an aluminum alloy, iron, or stainless steel.

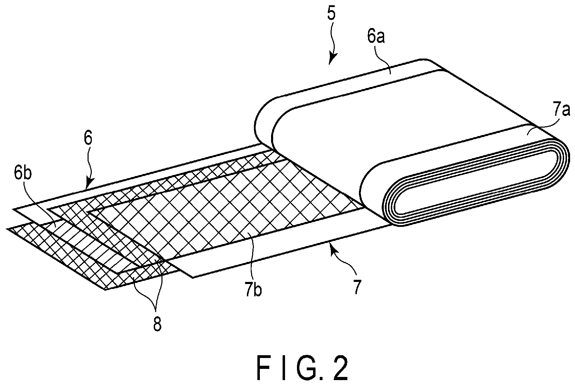

FIG. 2 is a partially unfolded perspective view of an electrode group used in the secondary battery shown in FIG. 1. As shown in FIG. 2, the flat electrode group 5 is formed by winding the positive electrode 6 and the negative electrode 7 in a flat shape with the separator 8 interposed therebetween. The positive electrode 6 includes a belt-shaped positive electrode current collector made of, for example, a metal foil, a positive electrode current-collecting tab 6a configured from one end parallel to a long side of the positive electrode current collector, and a positive electrode materials layer (positive electrode active material-containing layer) 6b formed on the positive electrode current collector excluding at least the portion forming the positive electrode current-collecting tab 6a. Meanwhile, the negative electrode 7 includes a belt-shaped negative electrode current collector made of, for example, a metal foil, a negative electrode current-collecting tab 7a configured from one end parallel to a long side of the negative electrode current collector, and a negative electrode materials layer (negative electrode active material-containing layer) 7b formed on the negative electrode current collector excluding at least the portion forming the negative electrode current-collecting tab 7a.

Such a positive electrode 6, separator 8, and negative electrode 7 are wound with the positions of the positive electrode 6 and the negative electrode 7 shifted with respect to each other, so that the positive electrode current-collecting tab 6a protrudes from the separator 8 in the winding axis direction of the electrode group and the negative electrode current-collecting tab 7a protrudes from the separator 8 in the opposite direction. With such a manner of winding, the electrode group 5 is configured so that the spirally wound positive electrode current-collecting tab 6a protrudes from one end face, and the spirally wound negative electrode current-collecting tab 7a protrudes from the other end face, as shown in FIG. 2. The electrode group 5 is impregnated with a nonaqueous electrolyte (not shown).

As shown in FIG. 1, each of the positive electrode current-collecting tab 6a and the negative electrode current-collecting tab 7a is divided into two bundles with the vicinity of the winding center of the electrode group set as a boundary. Electrically conductive holding members 9 have substantially U-shaped first and second holding parts 9a and 9b and a connecting part 9c for electrically connecting the first holding part 9a and the second holding part 9b. In each of the positive and negative electrode current-collecting tabs 6a and 7a, one of the bundles is held by the first holding part 9a, and the other of the bundles is held by the second holding part 9b.

The positive electrode lead 10 includes a substantially rectangular support plate 10a, a through-hole 10b opened in the support plate 10a, and strip-shaped current-collecting parts 10c and 10d branched from the support plate 10a and extending downward. Meanwhile, the negative electrode lead 11 includes a substantially rectangular support plate 11a, a through-hole 11b opened in the support plate 11a, and strip-shaped current-collecting parts 11c and 11d branched from the support plate 11a and extending downward.

The positive electrode lead 10 holds the holding member 9 between the current-collecting parts 10c and 10d. The current-collecting part 10c is disposed on the first holding part 9a of the holding member 9. The current-collecting part 10d is disposed on the second holding part 9b. The current-collecting parts 10c and 10d, the first and second holding parts 9a and 9b, and the positive electrode current-collecting tab 6a are joined by, for example, ultrasonic welding. Thus, the positive electrode 6 of the electrode group 5 and the positive electrode lead 10 are electrically connected to each other via the positive electrode current-collecting tab 6a.

The negative electrode lead 11 holds the holding member 9 between the current-collecting parts 11c and 11d. The current-collecting part 11c is disposed on the first holding part 9a of the holding member 9. Meanwhile, the current-collecting part 11d is disposed on the second holding part 9b. The current-collecting parts 11c and 11d, the first and second holding parts 9a and 9b, and the negative electrode current-collecting tab 7a are joined by, for example, ultrasonic welding. Thus, the negative electrode 7 of the electrode group 5 and the negative electrode lead 11 are electrically connected to each other via the negative electrode current-collecting tab 7a.

The materials of the positive and negative electrode leads 10 and 11 and the holding member 9 are not particularly specified, but are preferably the same as the materials of the positive and negative electrode external terminals 3 and 4. For example, aluminum or an aluminum alloy is used for the positive electrode external terminal 3, and aluminum, an aluminum alloy, copper, nickel, nickel-plated iron, or the like is used for the negative electrode external terminal 4. For example, if the materials of the external terminals are aluminum or an aluminum alloy, the materials of the leads are preferably aluminum or an aluminum alloy. If the external terminals are made of copper, the materials of the leads are preferably copper or the like.

The rectangular plate-shaped lid 2 is seam-welded to the opening of the container can 1 by, for example, a laser. The lid 2 is formed of, for example, a metal such as aluminum, an aluminum alloy, iron, or stainless steel. The lid 2 and the container can 1 are preferably formed of the same species of metal. The positive electrode external terminal 3 is electrically connected to the support plate 10a of the positive electrode lead 10, and the negative electrode external terminal 4 is electrically connected to the support plate 11a of the negative electrode lead 11. The insulating gasket 12 is disposed between the lid 2 and the positive and negative electrode external terminals 3 and 4, and electrically insulates the positive and negative electrode external terminals 3 and 4 from the lid 2. The insulating gasket 12 is preferably a resin molded product.

The secondary battery according to the second embodiment includes the positive electrode according to the first embodiment. Thus, the secondary battery has superior rate property.

(Third Embodiment)

According to a third embodiment, provided is a battery pack including the secondary battery according to the second embodiment. The number of single-batteries (secondary batteries) included in the battery pack may be one or plural.

A plurality of secondary batteries may be electrically connected in series, in parallel, or in a combination of in-series connection and in-parallel connection, to configure a battery module. The battery pack may include plural battery modules.

The battery pack may further include a protective circuit. The protective circuit functions to control charge and discharge of the battery. Alternatively, a circuit included in devices (such as electronic devices and automobiles) using the battery pack as a power source may be used as the protective circuit of the battery pack.

The battery pack may further include an external power distribution terminal. The external power distribution terminal is configured to output current from the battery to the outside and to input current into the battery. In other words, when using the battery pack as a power source, current is supplied to the outside through the external power distribution terminal. When charging the battery pack, charge current (including regenerative energy of a motive force of an automobile) is supplied to the battery pack through the external power distribution terminal.

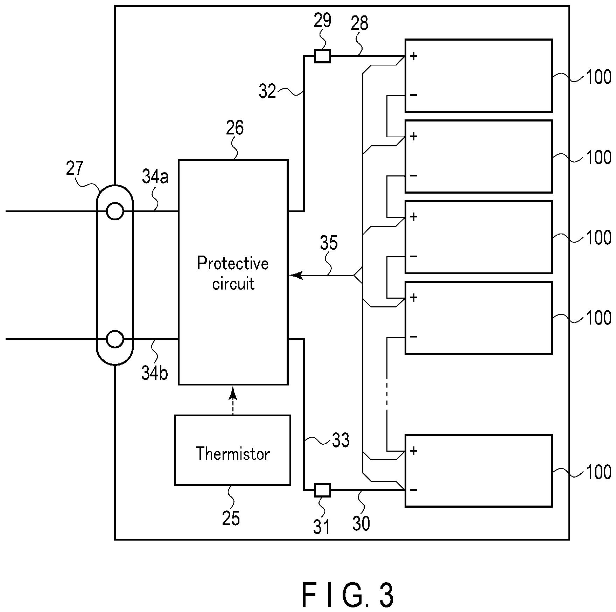

Next, an example of the battery pack according to the third embodiment will be described with reference to the drawings. FIG. 3 is a block diagram showing an example of an electric circuit of the battery pack according to the embodiment.

The battery pack shown in FIG. 3 includes a plurality of flat batteries 100 having the structure shown in FIGS. 1 and 2. These single-batteries 100 are electrically connected to each other in series as shown in FIG. 3.

As shown in FIG. 3, a thermistor 25, a protective circuit 26, and a power distribution terminal 27 to external devices are installed on the printed wiring board.

A positive electrode-side lead 28 is connected to a positive electrode external terminal of a single-battery 100 of the battery module, and the positive electrode-side lead 28 is electrically connected to a positive electrode-side connector 29 of the printed wiring board. A negative electrode-side lead 30 is connected to a negative electrode external terminal of another single battery 100 of the battery module, and the negative electrode-side lead 30 is electrically connected to a negative electrode-side connector 31 of the printed wiring board. These connectors 29 and 31 are electrically connected to the protective circuit 26 through wirings 32 and 33 formed on the printed wiring board.

The thermistor 25 detects the temperature of each of the single-batteries 100, and the detection signals are transmitted to the protective circuit 26. The protective circuit 26 can shut off a plus-side wiring 34a and a minus-side wiring 34b between the protective circuit 26 and the power distribution terminal 27 to an external device under a predetermined condition. An example of the predetermined condition is the case where a signal indicating that the temperature of the single-battery 100 is equal to or higher than a predetermined temperature is received from the thermistor 25. Another example of the predetermined condition is the case where overcharge, over-discharge, overcurrent, or the like of the single battery 100 is detected. The detection of the overcharge or the like is performed for individual single-batteries 100 or all the single-batteries 100 as a whole. In the case of detecting the individual single batteries 100, a battery voltage may be detected, or a positive electrode potential or a negative electrode potential may be detected. In the latter case, a lithium electrode used as a reference electrode is inserted into each single-battery 100. In the battery pack shown in FIG. 3, wiring 35 for voltage detection is connected to each of the single-batteries 100, and a detection signal is transmitted to the protective circuit 26 through the wiring 35.

Although the battery pack shown in FIG. 3 has a configuration in which the single-batteries 100 are connected in series, the battery pack according to the third embodiment may be configured so that the single-batteries 100 are connected in parallel to increase the battery capacity. Alternatively, the battery pack according to the third embodiment may include plural single-batteries 100 connected in a combination of in-series connection and in-parallel connection. Assembled battery packs may also be connected in series or in parallel.

Although the battery pack shown in FIG. 3 includes a plurality of single-batteries 100, the battery pack according to the third embodiment may be one including one single-battery 100.

The form of the battery pack is appropriately changed depending on the applications. The battery pack is preferably used in applications where cycle property is desired along with large current property. Specifically, the battery pack is used as a power source of digital cameras or for onboard use such as that on two-wheeled to four-wheeled hybrid electric automobiles, two-wheeled to four-wheeled electric automobiles, and motor assisted bicycles. The battery pack is particularly suitable for use in onboard applications.

In an automobile including the battery pack according to the embodiment, the battery pack is, for example, one that recovers regenerative energy of the motive force of the automobile.

The battery pack of the third embodiment described above in detail includes the secondary battery of the second embodiment. Therefore, the battery pack according to the third embodiment can attain superior rate property.

[Examples]

Examples will be described below, but the embodiments are not limited to the examples described below.

(Example 1)

An electrode (positive electrode) was prepared as described below. Thereafter, in order to evaluate the electrochemical characteristics of the prepared electrode, a two-electrode coin cell using lithium metal as a counter electrode was prepared.

(Preparation of positive electrode)

As a positive electrode active material, a lithium-nickel-cobalt-manganese composite oxide $LiNi_{0.8}Co_{0.1}Mn_{0.1}O_2$ formed of singular particles was prepared. The contents of nickel, cobalt, and manganese contained in the lithium-nickel-cobalt-manganese composite oxide $LiNi_{0.8}Co_{0.1}Mn_{0.1}O_2$ were 84.0 mol%, 7.0 mol%, and 9.0 mol%, respectively. Also, the average particle size (D50) of the active material was 4.0 $\mu$m. Acetylene black was prepared as an electrically conductive auxiliary agent (electro-conductive agent), and polyvinylidene fluoride was prepared as a binder, that were used. The active material, the electrically conductive auxiliary agent, and the binder were dissolved and mixed in N-methyl-2-pyrrolidone (NMP) at a weight ratio of 93: 5: 2 to prepare a paste.

The specific method of the paste preparation is described below. The active material and the electrically conductive auxiliary agent were mixed using a Henschel mixer to form a composite (compound) of the active material and the electrically conductive auxiliary agent. The obtained composite and binder were dispersed in NMP and kneaded using a planetary mixer having a capacity of 20 L. At this time, in order to avoid a rapid increase in viscosity, each material was added to NMP little by little. The kneading was performed under solid-kneading conditions at a concentration of a solid content (Non-Volatile content; NV) of 78.5%. Then, the kneaded product was transferred to a bead mill apparatus having a capacity of 2 L, and mixing was performed at a bead rotational speed of 800 rpm to prepare a paste.

A paste-like dispersion liquid was uniformly applied as a positive electrode coating liquid to both obverse and reverse surfaces of a current collector made of an aluminum foil. The coating film of the positive electrode coating liquid was dried to form a positive electrode active material-containing layer. The dried current collector and positive electrode active material-containing layer were subjected to a pressing treatment to obtain an electrode. The density of the active material-containing layer was 3.3 g/cm$^3$.

(Examples 2 to 4)

Positive electrodes were prepared in the same manner as in Example 1 except that positive electrode active materials having an element composition, a particle form, and an average particle size (D50) shown in Table 1 below were used.

(Comparative Examples 1 to 5)

Positive electrodes were prepared in the same manner as in Example 1 except that positive electrode active materials having an element composition, a particle form, and an average particle size (D50) shown in Table 1 were used.

<Preparation of two-electrode coin cell>

A two-electrode coin cell was prepared using the positive electrode prepared in each example. As a working electrode, the positive electrodes prepared in Examples 1 to 4 and Comparative Examples 1 to 5 were used. As a counter electrode, lithium metal was used. As a liquid electrolyte, one obtained by dissolving lithium hexafluorophosphate (LiPF$_6$) in a mixed solvent of ethylene carbonate and diethyl carbonate was used. The ratio of ethylene carbonate to diethyl carbonate in the mixed solvent was 1: 2. The concentration of LiPF$_6$ was 1 mol/L. The amount of electrolyte was 200 $\mu$L.

<Measurement of entropy change>

The heat generation derived from the entropy change of the battery was measured by the following method.

The coin cell according to each example was adjusted to a predetermined state of charge, and then held in a thermostatic bath at 25°C for 24 hours or more. Next, in a state in which a terminal capable of measuring an equilibrium voltage (open circuit voltage) $V_0$ of the battery was connected to the coin cell, the coin cell was placed in a thermostatic chamber, held for 6 hours each at temperatures of 0°C, -10°C, -20°C, and -30°C, in this order, and an OCV change was measured. Thereafter, $dV_0/dT$ was measured from the temperature change of the equilibrium voltage (open circuit voltage) $V_0$ of the battery.

For example, a coin cell in which the SOC is adjusted to 0% is prepared and held in a thermostatic bath at 25°C for 24 hours or more, and then held for 6 hours at each temperature in the order of 0°C, -10°C, -20°C, and -30°C to measure the OCV change. Thereafter, $dV_0/dT$ is measured from the temperature change of the equilibrium voltage (open circuit voltage) $V_0$ of the battery.

Here, the following formula (X) can be derived from the formulas for Gibbs energy, $\Delta G = \Delta H - T \cdot \Delta S$ and $\Delta G = -n \cdot F \cdot \Delta E$.

$$\Delta S = -(\partial \Delta G / \partial T) = n \cdot F \cdot (\partial E / \partial T) \quad \ldots \quad (X)$$

In the formula (X), n is the number of charges involved in the reaction, F is the Faraday constant, and E is the electromotive force.

As described above, the entropy change $\Delta S$ at a specific SOC can be calculated from the gradient of the change in the equilibrium voltage $V_0$ of the battery due to the temperature.

<Rate property evaluation>

First, the prepared coin cell was charged at a current density of 0.2 C in an environment of 25°C until a state of charge (SOC) reached 100%. Thereafter, the coin cell was discharged at a current density of 0.2 C until the SOC reached 0%. Further, the coin cell was charged at a current density of 0.2 C until reaching the upper limit voltage, and 0.2 C charging capacity was measured. Thereafter, the coin cell was discharged again at a current density of 0.2 C until the SOC reached 0%, and then charged at a current density of 5 C until reaching the upper limit voltage, and 5 C charging capacity was measured. The 5 C/0.2 C rate property were calculated in percentage by dividing the charging capacity at 5 C by the charging capacity at 0.2 C and multiplying by 100. The results are shown in Table 1.

<Evaluation of cycle property>

The prepared coin cell was subjected to a charge-discharge cycle test in an environment of 45°C. In the charge and discharge, first, the battery was initially charged up to 4.25 V at 0.2 mA, and then discharged to 3.00 V at 0.2 mA. Thereafter, charging and discharging were performed at 1.0 mA. Further, charging and discharging were performed up to 4.25 V at 0.2 mA, the capacity of the battery was confirmed, and then charging and discharging were repeated 100 cycles at 1.0 mA. Then, the capacity retention ratio was calculated from the initial discharge capacity and the discharge capacity at the 100th cycle. The results are shown in Table 1.

[Table 1]

| Table 1 | Positive electrode active material | | | | | |
|---|---|---|---|---|---|---|
| | Ni | Co | Mn | Ratio Co/Mn | Particle form | Particle size D50 |
| Unit, etc. | [mol %] | [mol %] | [mol %] | [-] | [-] | [μm] |
| Example 1 | 84.0 | 7.0 | 9.0 | 0.78 | Singular particle | 4.0 |
| Example 2 | 84.0 | 7.0 | 9.0 | 0.78 | Singular particle | 3.8 |
| Example 3 | 71.0 | 14.5 | 14.5 | 1.00 | Singular particle | 4.4 |
| Example 4 | 51.3 | 19.2 | 29.5 | 0.65 | Singular particle | 4.2 |
| Comparative Example 1 | 78.5 | 10.6 | 9.5 | 1.12 | Multiparticle | 12.2 |
| Comparative Example 2 | 78.5 | 10.6 | 9.5 | 1.12 | Multiparticle | 4.4 |
| Comparative Example 3 | 83.0 | 9.0 | 8.0 | 1.13 | Singular particle | 4.0 |
| Comparative Example 4 | 83.0 | 9.0 | 8.0 | 1.13 | Singular particle | 4.0 |
| Comparative Example 5 | 52.0 | 15.5 | 32.5 | 0.48 | Multiparticle | 6.0 |

(continued)

| Table 1 | $0 \leq b < 0.1$ | $\Delta S_{0 \leq b < 0.1}$ | $0.5 < b \leq 0.75$ | $\Delta S_{0.5 < b \leq 0.75}$ | Rate property | Cycle property |
|---|---|---|---|---|---|---|
| Unit, etc. | [-] | [J·K$^{-1}$·mol$^{-1}$] | [-] | [J·K$^{-1}$·mol$^{-1}$] | [%] | [%] |
| Example 1 | 0.00 | 17.1 | 0.75 | 3.7 | 63 | 96.5 |
| Example 2 | 0.09 | 4.6 | 0.70 | 4.3 | 63 | 96.2 |
| Example 3 | 0.08 | 17.1 | 0.60 | 1.8 | 64 | 97.0 |
| Example 4 | 0.06 | 3.6 | 0.55 | 8.8 | 68 | 97.9 |
| Comparative Example 1 | 0.00 | -10.3 | 0.75 | 5.2 | 44 | 95.6 |
| Comparative Example 2 | 0.08 | 35.7 | 0.55 | -1.8 | 54 | 92.0 |
| Comparative Example 3 | 0.07 | -9.6 | 0.75 | 14.3 | 59 | 95.2 |
| Comparative Example 4 | 0.00 | -13.5 | 0.60 | 1.2 | 57 | 95.2 |
| Comparative Example 5 | 0.00 | -2.5 | 0.55 | -1.2 | 61 | 95.5 |

In Table 1, the columns of "$0 \leq b \leq 0.1$" and "$0.5 \leq b \leq 0.75$" indicate the numerical values of the portion b of the subscript a-b of Li in the general formula (A). An example indicated as "Singular particle" in the column of "Particle form" is an example in which, as a result of performing cross-sectional SEM observation of the positive electrode according to the method described in the first embodiment, the proportion of singular particles included in NCM was 80% or more. On the other hand, the column indicated as "Multiparticle" is an example in which the ratio of singular particles contained in NCM was less than 80%.

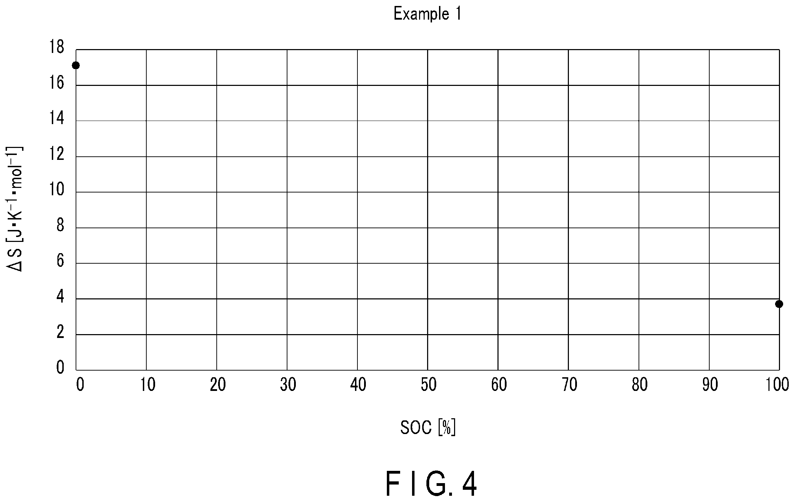

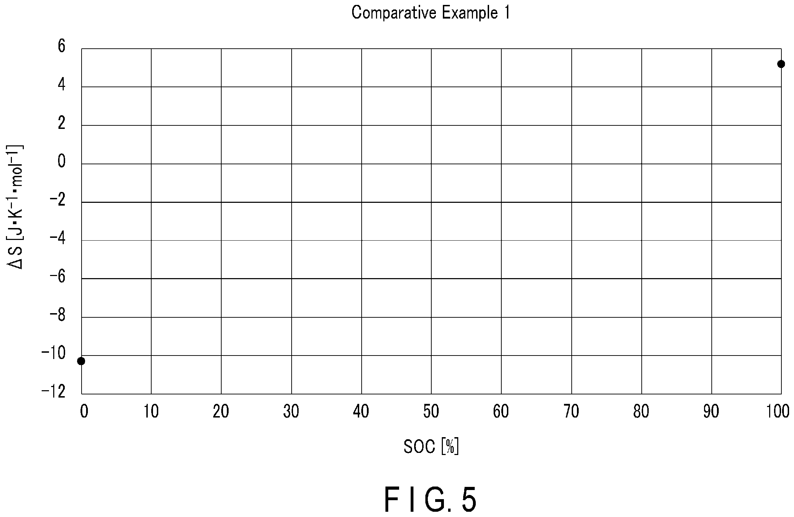

FIGS. 4 and 5 show graphs plotting entropy change $\Delta S$ [$J \cdot K^{-1} \cdot mol^{-1}$] with respect to SOC [%] according to Example 1 and Comparative Example 1, respectively. In the graph according to each example, entropy changes $\Delta S$ when the SOCs are 0% and 100% are calculated and plotted on the graph.

From the graph according to Example 1 shown in FIG. 4, it can be seen that the entropy change $\Delta S$ was plus (positive) in both the case where the SOC was 0% and the case where the SOC was 100%. Note, the case where the SOC is 0% is a case where the value of the subscript b in the general formula (A) satisfies $0 \leq b < 0.1$. The case where the SOC is 100% is a case where the value of the subscript b in the general formula (A) satisfies $0.5 < b \leq 0.75$.

From the graph of Comparative Example 1 according to FIG. 5, it can be seen that the entropy change $\Delta S$ was minus (negative) when the SOC was 0%. In addition, in the case where the SOC is 100%, it can be seen that the entropy change $\Delta S$ was plus (positive) . Note, the case where the SOC is 0% is a case where the value of the subscript b in the general formula (A) satisfies $0 \leq b < 0.1$. The case where the SOC is 100% is a case where the value of the subscript b in the general formula (A) satisfies $0.5 < b \leq 0.75$.

From Table 1, when the ratio Co/Mn in NCM represented by the general formula (A) was 1.0 or less, the entropy change $\Delta S_{0 \leq b < 0.1}$ satisfied the following formula (1), and the entropy change $\Delta S_{0.5 < b \leq 0.75}$ satisfied the following formula (2), the coin cell including this positive electrode had excellent rate property and excellent cycle life property.

$$0 \; J/K \cdot mol \; < \; \Delta S_{0 \leq b < 0.1} \; \leq \; 20 \; J/K \cdot mol \quad \ldots \quad (1)$$

$$0 \; J/K \cdot mol \; < \; \Delta S_{0.5 < b \leq 0.75} \; \leq \; 10 \; J/K \cdot mol \quad \ldots \quad (2)$$

As shown in Examples 1 to 4, when NCM containing 80% or more of singular particles as the particle form was used, excellent rate property could be achieved.

As shown in Comparative Examples 1 and 2, when the ratio Co/Mn exceeded 1.0 and the entropy change $\Delta S_{0 \leq b < 0.1}$ at the initial stage of charging or the entropy change $\Delta S_{0.5 < b \leq 0.75}$ at the end stage of charging was minus (negative), both the rate property and the cycle property were inferior to those of Examples.

As shown in Comparative Examples 3 and 4, even when the particle form of the positive electrode active material (NCM) was singular particles, the entropy change $\Delta S_{0 \leq b < 0.1}$ at the initial stage of charging was negative when the ratio Co/Mn exceeds 1.0. As a result, for example, in Comparative Examples 3 and 4, both the rate property and the cycle property were inferior to those in Example 1.

As shown in Comparative Example 5, even when the ratio Co/Mn was 1.0 or less, when the entropy change $\Delta S_{0 \leq b < 0.1}$ at the initial stage of charging and the entropy change $\Delta S_{0.5 < b \leq 0.75}$ at the end stage of charging were minus (negative), both the rate property and the cycle property were inferior to those of Examples.

According to at least one embodiment and example described above, a positive electrode is provided. The positive electrode includes a positive electrode active material including a lithium-nickel-cobalt-manganese composite oxide represented by general formula $Li_{a-b}Ni_{1-x-y-z}Co_xMn_yM_zO_2$. A ratio Co/Mn in the lithium-nickel-cobalt-manganese composite oxide is 1.0 or less. In the above general formula, $0.9 < a \leq 1.25$, $0 < x < 0.3$, $0 < y < 0.3$, $0 < z < 0.2$, and $x+y+z < 1$, and M is one or more elements selected from the group consisting of Fe, Cu, Ti, Mg, Al, W, Y, B, Mo, Nb, Zn, Sn, Zr, Ga, and V. For the positive electrode, entropy change $\Delta S_{0 \leq b < 0.1}$ when $0 \leq b < 0.1$ satisfies the following formula (1), and entropy change $\Delta S_{0.5 < b \leq 0.75}$ when $0.5 < b \leq 0.75$ satisfies the following formula (2).

$$0 \; J/K \cdot mol \; < \; \Delta S_{0 \leq b < 0.1} \; \leq \; 20 \; J/K \cdot mol \quad \ldots \quad (1)$$

$$0 \; J/K \cdot mol \; < \; \Delta S_{0.5 < b \leq 0.75} \; \leq \; 10 \; J/K \cdot mol \quad \ldots \quad (2).$$

The positive electrode according to the embodiment can diminish overvoltage in the initial stage of charging and end stage of charging, and can thus realize superior rate property.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

REFERENCE SIGNS LIST

1...container can
2...lid
3...positive electrode external terminal
4...negative electrode external terminal
5...electrode group
6...positive electrode
6a...positive electrode current collecting tab
6b...positive electrode material layer (positive electrode active material-containing layer)
7...negative electrode
7a...negative electrode current collecting tab
7b...negative electrode material layer (negative electrode active material-containing layer)
8... separator
9...holding member
10...positive electrode lead
11... negative electrode lead
12...insulating gasket
25...thermistor
26...protective circuit
27...power distribution terminal
28...positive electrode-side lead
29...positive electrode-side connector
30... negative electrode-side lead
31...negative electrode-side connector
34a...plus-side wiring
34b...minus-side wiring
35...wiring
100...single-battery.

**Claims**

1. A positive electrode comprising a positive electrode active material including a lithium-nickel-cobalt-manganese composite oxide represented by the following general formula (A),

$$Li_{a-b}Ni_{1-x-y-z}Co_xMn_yM_zO_2 ... \qquad (A)$$

where $0.9 < a \leq 1.25$, $0 < x < 0.3$, $0 < y < 0.3$, $0 < z < 0.2$, and $x+y+z < 1$, and M is one or more elements selected from the group consisting of Fe, Cu, Ti, Mg, Al, W, Y, B, Mo, Nb, Zn, Sn, Zr, Ga, and V,
wherein a ratio Co/Mn in the lithium-nickel-cobalt-manganese composite oxide is 1.0 or less, and
for the positive electrode, entropy change $\Delta S_{0 \leq b < 0.1}$ when $0 \leq b < 0.1$ satisfies the following formula (1), and entropy change $\Delta S_{0.5 < b \leq 0.75}$ when $0.5 < b \leq 0.75$ satisfies the following formula (2).

$$0 \ J/K \cdot mol < \Delta S_{0 \leq b < 0.1} \leq 20 \ J/K \cdot mol \ \ ... \ (1)$$

$$0 \ J/K \cdot mol < \Delta S_{0.5 < b \leq 0.75} \leq 10 \ J/K \cdot mol \ \ ... \ (2)$$

2. The positive electrode according to claim 1, wherein a proportion of singular particles contained in the lithium-nickel-cobalt-manganese composite oxide is 80% or more.

3. The positive electrode according to claim 1 or 2, wherein the ratio Co/Mn is 0.80 or less.

4. The positive electrode according to claim 1 or 2, wherein the ratio Li/Me of the amount of lithium to the amount of metal elements other than lithium contained in the lithium-nickel-cobalt-manganese composite oxide is 1.1 or less.

5. The positive electrode according to claim 1 or 2, wherein x+y+z < 0.50 in the general formula (A).

6. A secondary battery comprising:

the positive electrode according to claim 1 or 2;
a negative electrode; and
an electrolyte.

7. The secondary battery according to claim 6, wherein

the negative electrode comprises a negative electrode current collector and a negative electrode active material-containing layer provided on the negative electrode current collector, and
the negative electrode active material-containing layer contains a negative electrode active material capable of having lithium ions inserted and extracted at a potential of 0.4 V (vs. Li/Li$^+$) or more.

8. A battery pack comprising the secondary battery according to claim 6.

F I G. 1

F I G. 2

F I G. 3

EP 4 542 663 A1

Example 1

F I G. 4

Comparative Example 1

F I G. 5

<div align="center">

**INTERNATIONAL SEARCH REPORT**

</div>

| | International application No. |
|---|---|
| | **PCT/JP2022/023744** |

**A.    CLASSIFICATION OF SUBJECT MATTER**

   *H01M 4/13*(2010.01)i; *H01M 4/505*(2010.01)i; *H01M 4/525*(2010.01)i
   FI:   H01M4/13; H01M4/525; H01M4/505

According to International Patent Classification (IPC) or to both national classification and IPC

**B.    FIELDS SEARCHED**

Minimum documentation searched (classification system followed by classification symbols)

   H01M4/13; H01M4/505; H01M4/525

Documentation searched other than minimum documentation to the extent that such documents are included in the fields searched

   Published examined utility model applications of Japan 1922-1996
   Published unexamined utility model applications of Japan 1971-2022
   Registered utility model specifications of Japan 1996-2022
   Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2002-110167 A (ILION TECHNOLOGY CORP) 12 April 2002 (2002-04-12)<br>    entire text, all drawings | 1-8 |
| A | JP 2013-143353 A (MITSUBISHI MOTORS CORP) 22 July 2013 (2013-07-22)<br>    paragraphs [0003], [0020], [0027] | 1-8 |
| A | JP 2008-47371 A (TOSHIBA CORP) 28 February 2008 (2008-02-28)<br>    claim 8, paragraph [0017] | 1-8 |

☐ Further documents are listed in the continuation of Box C.        ☑ See patent family annex.

| | | |
|---|---|---|
| * | Special categories of cited documents: | "T"   later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"   document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"   document member of the same patent family |

| Date of the actual completion of the international search | Date of mailing of the international search report |
|---|---|
| **04 July 2022** | **16 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/023744**

| Patent document cited in search report | | | Publication date (day/month/year) | Patent family member(s) | | | Publication date (day/month/year) |
|---|---|---|---|---|---|---|---|
| JP | 2002-110167 | A | 12 April 2002 | US | 2003/0022063 | A1 | |
| | | | | entire text, all drawings | | | |
| | | | | EP | 1189296 | A2 | |
| | | | | AT | 450898 | T | |
| JP | 2013-143353 | A | 22 July 2013 | (Family: none) | | | |
| JP | 2008-47371 | A | 28 February 2008 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014155496 A
- JP 11242959 A
- JP 2008047371 A
- JP 2020047830 A